# EUROPEAN PATENT SPECIFICATION

(11) **EP 2 039 498 B1**
(45) Date of publication and mention of the grant of the patent: **16.03.2011**
(21) Application number: 08164624.2
(22) Date of filing: 18.09.2008
(51) Int. Cl.: B29C 70/86, B29C 33/30, F16S 3/06, B66C 23/64, E04G 21/04

(54) **Method to make an arm for the distribution of concrete, and arm thus made**
Verfahren zum Herstellen eines Auslegers zur Verteilung von Beton und so hergestellter Ausleger
Procédé de fabrication d'un bras pour la distribution de béton, et bras ainsi fabriqué

(30) Priority: 19.09.2007 IT UD20070169
(43) Date of publication of application: 25.03.2009
(73) Proprietor: Cifa S.P.A., 20030 Senago, Milano (IT)
(72) Inventor: Pirri, Nicola, 20146, Milano (IT); Cipolla, Davide, 22063 Cantu (CO) (IT); Cortellini, Mauro Marco, 20089, Rozzano (MI) (IT)
(74) Representative: Petraz, Gilberto Luigi

(56) References cited:
- EP-A- 0 297 196
- EP-A- 0 895 234
- EP-A- 1 801 177
- DE-A1- 19 834 772
- GB-A- 1 009 711
- GB-A- 2 382 323
- GB-A- 2 387 375
- US-A- 3 087 581
- US-A- 3 947 191
- US-A- 3 958 377
- US-A- 4 696 711
- US-A- 5 245 770
- US-B1- 6 692 681
- US-B1- 6 786 233

## Description

### FIELD OF THE INVENTION

The present invention concerns a method to make an arm for the distribution of concrete, or other material similar to concrete, used on heavy work vehicles, such as for example a truck or concrete mixer.

The invention also concerns the distribution arm obtained using said method.

The distribution arm made according to the present invention comprises a plurality of articulated segments, pivoted to each other at the ends. The segments can be disposed in a folded configuration during transportation to the place where they will be used, and a work configuration, in which they are progressively extended according to the length/height to be reached.

### BACKGROUND OF THE INVENTION

An arm for the distribution of concrete is known, mounted on heavy work vehicles used in the building sector, as described in the patent application IT UD2007A000057 in the name of the present Applicant.

The distribution arm of the known type comprises segments consisting of a main girder made of composite material, of a normally rectangular section which substantially narrows in its length. The segments also comprise longitudinal and/or transverse stiffening elements and/or for connection to specific equipment. These elements are made of metal or composite material, they are glued to or immersed in the structure of the main girder of the segments.

Applicant, based on the idea of the use of composite material for the construction of said arms, has further developed the construction technique in order to obtain significant reductions in the costs of production, in particular in the design and construction of the relative molds and models, and to allow maximum flexibility and versatility in production for assembly on different types of vehicles according to the specific requirements.

Another purpose obtained with the present invention is to simplify maintenance operations of the distribution arm during normal working activity.

Another purpose is to allow great flexibility in the choice of the length, resistance and rigidity of the segments of the arm, allowing to vary on each occasion one and/or the other of said parameters according to specific requirements and requests.

Another purpose is to allow easy modification both of the articulation centers of the individual arms, and also the position of the attachment of the relative movement cylinder without modifying the models and molds of the main girder.

The Applicant has devised, tested and embodied the present invention to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the method according to the present invention comprises a first step in which each main girder of each segment of arm is formed, with a predefined length, by depositing a predefined plurality of layers of pre-impregnated composite material in a female forming mold.

According to a characteristic feature of the present invention, the cross section of each main girder, of predefined length, is constant over its whole length.

In this way, the productive flexibility is considerably increased with respect to known solutions, since it is possible to modify, relatively easily and quickly, both the length of the girder to be produced and also the density of the layers, according to needs and specific requirements, simply by using a variable number of elementary molds of equal section and connected with each other in sequence.

Thanks to this, once a determinate dimensional class of the main section has been chosen, the invention allows to make the models and molds relating to a corresponding main girder in a definitive manner.

According to the invention therefore, using the same molds it is possible to vary the resistance and rigidity of the girder obtained, for example by varying the number of layers of composite material used, and therefore to use for different arms the same molds for main girders which differ not only in length but also in load capacity.

According to a first embodiment, the section of the girder is substantially rectangular or square.

In another embodiment, the section is trapezoid in order to accentuate the contact pressure between the glued surfaces.

Moreover, according to another variant, the connection radii are very large, equal to almost 1.5-2 times the thickness of the layer, to facilitate removal from the molds.

The method according to the present invention also comprises a second step in which the composite material, deposited in layers in the mold, is subjected to polymerization, for example by treatment in an autoclave or in another similar known manner.

The method then comprises a third step in which each main girder is removed from the mold, and a fourth step in which, on each main girder, auxiliary elements are attached, thus forming a relative segment, for connection to adjacent segments or for the attachment of movement and/or support devices for the pipe that carries the concrete.

In a preferential embodiment, said elements for connection to auxiliary equipment or adjacent segments, and/or said elements for attachment of the concrete pipes, are made starting from a male mold so that the reciprocal contact surfaces with the main girder are substantially smooth.

The method also comprises a fifth step in which the extendible arm is assembled, connecting the various segments at the respective ends.

In one embodiment of the invention, the first step comprises, during the molding step and between the layers of composite material, in correspondence with at least one end of the segment, the insertion of inserts and/or reinforcements, made of metal or composite material, able to allow to connect the segment to a segment immediately before it or after it.

According to a variant, in the fourth step the connection elements to adjacent segments and/or the attachment elements of the movement devices are glued onto the relative anchorage zones of the segments, for example using a technique of gluing with the suction of the air bubbles: this is facilitated by the angles in the case of a trapezoid geometry.

In addition to gluing, a mechanical coupling can also be used, such as riveting or suchlike, to make the coupling more stable and secure.

According to another variant, the mold used in the first molding step comprises at least one end conformed so as to obtain a shape suitable for direct connection with an adjacent segment, therefore without needing auxiliary elements.

According to another variant, in the molding step steel blades are inserted into the mold, after the layers have been deposited, which are subsequently used for connection with an adjacent segment.

According to another variant, the mold used in the first step comprises elements for the attachment of a movement device to move the segments.

According to a preferential embodiment, the composite material used is of the woven unidirectional type of low modulus carbon.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a lateral view of a heavy work vehicle on which an extendible arm according to the present invention is mounted, in a folded operating transport condition;
- fig. 2 is a three-dimensional view of a segment which forms the arm made according to the invention;
- fig. 3 is a right three-dimensional view of a segment which forms the arm made according to the invention;
- fig. 4 is an enlarged three-dimensional view of a first detail of the segment of arm in fig. 2;
- fig. 5 is an exploded three-dimensional view of fig. 4;
- fig. 6 is an exploded three-dimensional view of a second detail of fig. 2;
- fig. 7 is an exploded three-dimensional view of a third detail of fig. 2;
- fig. 8 is a three-dimensional view of a detail of fig. 3;
- fig. 9 is an enlarged detail of fig. 8;
- fig. 10 is a cross section of a segment of arm made according to the invention;
- fig. 10a shows a detail of fig. 10;
- figs. 11, 12 and 13 show variants of fig. 10.

### DETAILED DESCRIPTION OF A PREFERENTIAL FORM OF EMBODIMENT

With reference to the attached drawings, a method according to the present invention is used to make an extendible arm 10 able to distribute concrete or analogous material for the building trade, mounted on a heavy work vehicle.

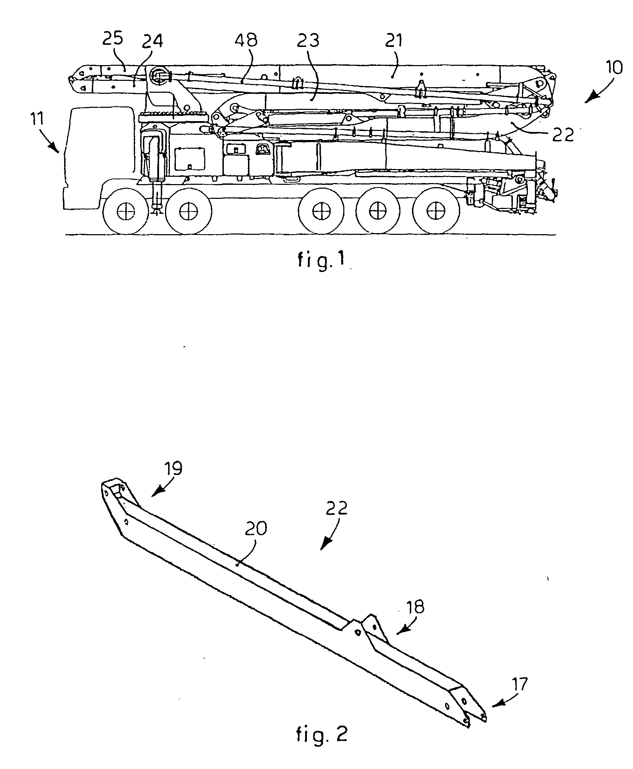

Fig. 1 shows an extendible arm 10 mounted on a heavy work vehicle 11, in a folded position for transport. The extendible arm 10 made using the present invention comprises a plurality of articulated segments, in this case five segments 21, 22, 23, 24 and 25, pivoted at the respective ends.

Each segment 21-25 comprises, at at least one of the ends, an element connecting it to the segment immediately before or after, or to a part of the frame of the heavy vehicle.

One or more segments 21-25 is obtained by making a box-like main girder 20, made of composite material, in particular pre-impregnated fibrous material deposited in successive layers, using a female mold with a constant section, rectangular or preferably slightly trapezoid, with an inclination of the vertical sides with respect to the horizontal sides comprised between 0.3 and 1.5°.

The female mold used advantageously consists of a plurality of elementary molds with a constant section, connected to each other in sequence, for example flanged, until the desired length of the main girder 20 is obtained.

The molds are all equal, and can thus be made starting from the same model, with obvious savings.

In the embodiment shown in fig. 2, which shows an example of a segment 22, the attachment 19 connecting it to the previous segment, and the attachment 18 connecting it to the movement cylinder, and the attachment 17 connecting it to the subsequent segment are all associated with the girder 20 made of composite material with a substantially rectangular section.

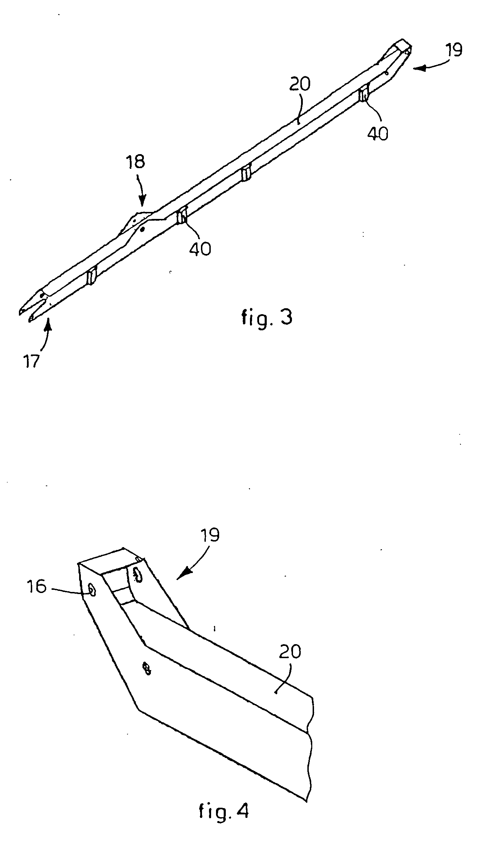

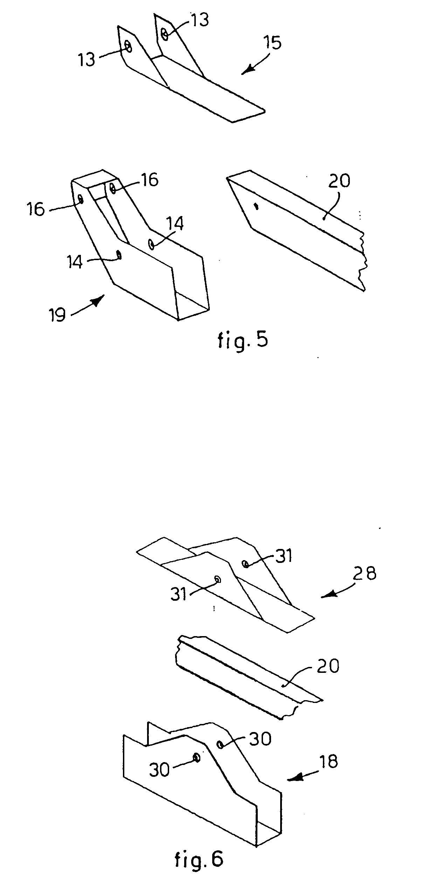

With reference to fig. 4 and the exploded detail of fig. 5, the attachment 19 connecting to the previous segment is made separately of a composite material, preferably from a male mold, so that the reciprocal contact surfaces with the girder 20 are smooth and their position is independent from the thickness of the layers both of the attachment and of the main girder. The attachment 19 has first holes 16, distant from the axis of the truncated box-like profile that forms the main girder of composite material, so that a connection pin can be inserted to connect with the adjacent segment. The attachment 19 also has second holes 14 for coupling with the segment 22 by means of the linkages interposed.

In particular, the attachment 19 is glued to the main girder 20 that forms the segment 22, advantageously with simultaneous aspiration of the air bubbles. In this case, it is provided to insert a reinforcement 15, made of metal or also of composite material, associated during the molding step, for example by gluing, with the terminal part, suitably conformed, of the segment 22.

The reinforcement 15 has holes 13 which allow to insert a possible pin or rivet which makes the coupling of the attachment 19 and girder 20 even more stable.

In the preferential embodiment, to guarantee better alignment, the holes 14 of the attachment 19 and the holes 13 of the reinforcement 15 are made after the elements 19 and 15 have been glued to the end of the main girder 20, and then the join pin is inserted through said holes and those that are formed in the girder 20.

According to a variant, the mold of the segment 22 is already provided conformed for the formation of the attachment 19, and any possible variations in the density of the layers are provided to reinforce the zone subject to great stresses.

As far as the attachment 18 is concerned, as shown in the exploded detail in fig. 6, it too can be made separately, of metal or composite material, and then glued to the girder that forms the segment 22, with the possible insertion of a reinforcement 28 inserted into the mold before the polymerization process, and the addition of a possible consolidating pin or rivet, with mating holes 30, 31 being made both on the attachment 18 and on the reinforcement 28, after gluing to the girder 20, for said pin or rivet.

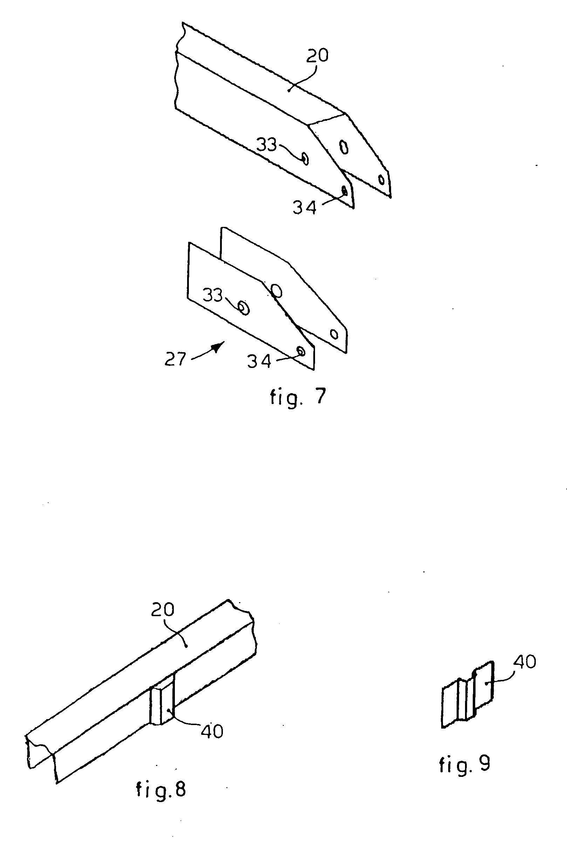

With reference to fig. 7, the connection attachment 17 to the subsequent segment is obtained by shaping directly the terminal end of the box-like girder 22, possibly modifying locally the disposition and number of the carbon layers. A reinforcement 27 may also be provided, inserted into the mold before the polymerization process, with relative mating holes 33, 34 for possible connection pin or rivets.

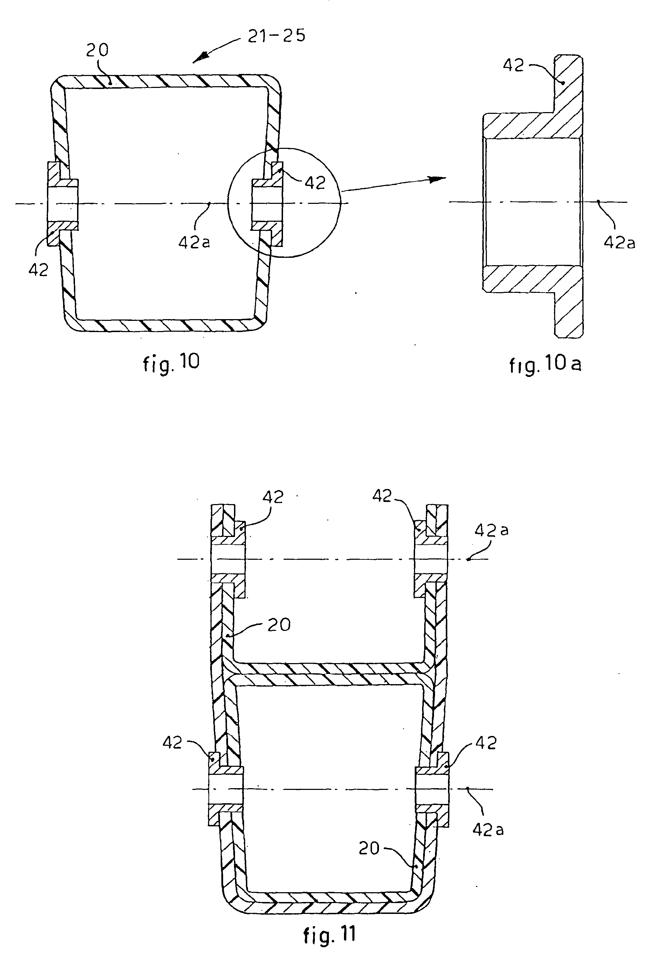

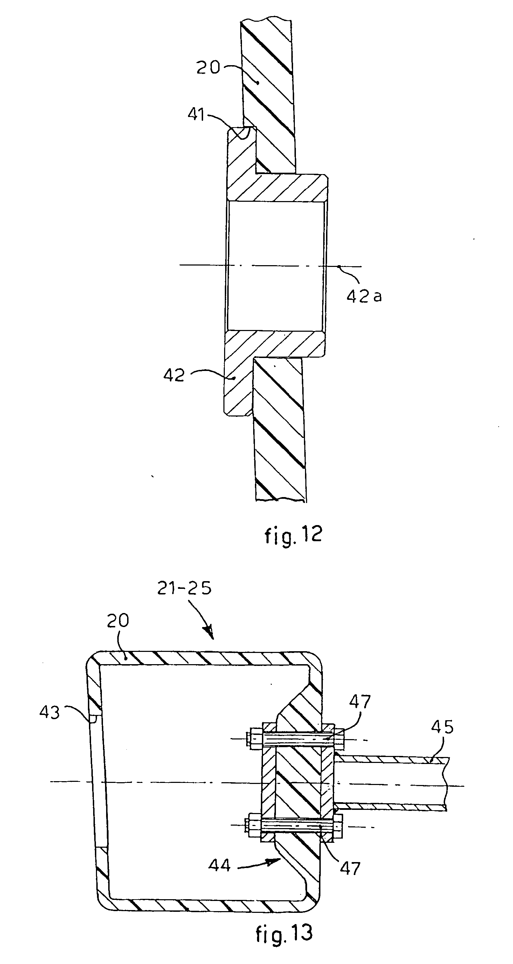

Figs. 10 to 13 show a cross section (partial in fig. 12) of a segment 21-25.

As can be seen in fig. 10, on one or both the walls, vertical during use, of the segment 21-25 there are bushings 42 made of metal material. The bushings 42 have an axial hole 42a which defines the positioning seating of the pins (not shown) of reciprocal connection between the segments 21-25 of composite material.

The bushings are preferably made of a metal material resistant to corrosion and are inserted during the molding step into suitable through holes made in said vertical walls.

In particular, the bushings 42 can be applied both on the box-like girder 20 of the relative segment 21-25, and also on the connection attachments 17, 18 and 19, and clamped with respect to the walls of composite material by gluing.

According to the invention, the metal bushings 42 are glued finished, so that it is not necessary to machine work the bushings 42 in a subsequent step.

According to a particular feature of the present invention, to respect the orthogonal disposition of the axis 42a of the bushings 42 and the axis of the girder 20, millings or borings 41 are made (as can be seen in fig. 12) on the lateral faces of composite material, which are inclined due to requirements of removing the products from the molds.

With reference to figs. 8 and 9, an auxiliary element 40 is provided to support the pipe 48 that carries the concrete.

In particular, in this case, the auxiliary element 40 consists of an omega-shaped element, advantageously with a constant section, made of composite material or metal, which is glued and possibly riveted to the box-like girder.

The omega element defines a gap for the pipe, and can be connected by means of rivets to the main girder 20.

Since it has a constant geometry, the omega element 40 can be obtained from a mold and cut into several pieces to obtain the desired height. Thanks to this, it is possible to use the same mold for the attachments of the pipe of any other segment with a constant section.

The omega elements 40 have holes, advantageously in the central zone, for connection to a counter plate attached to the pipe that has to be associated with the specific segment.

According to a variant of the present invention, shown in fig. 13, the attachment of the support 45 for the concrete pipe 48 is made by thickening locally, during the depositing of the layers of composite material, a corresponding zone 44 of a vertical wall of the box-like girder 20.

The thickened zone 44 can then be suitably holed to insert attachment screws 47 of said support 45 of the pipe 48.

To allow the screws 44 to be tightened, an access hole 43 is made on the vertical wall of the girder 20 opposite the support 45.

It is clear that modifications and/or additions of parts may be made to the method and arm to distribute concrete as described heretofore, without departing from the field and scope of the present invention as defined in the claims.

## Claims

1. Method to make an arm for the distribution of concrete (10), or other material similar to concrete, used on heavy work vehicles (11), such as for example a truck or concrete mixer, said arm (10) comprising a plurality of segments (21-25) selectively folding and extendible one with respect to the other, each of said segments (21-25) comprising a main girder (20) and auxiliary elements (17, 18, 19, 27, 40, 42, 45) for connection to adjacent segments or for attachment of movement and/or supporting devices for the pipe (48) that carries the concrete, the method comprising
- a first step in which each main girder (20) is formed, with a predefined length, by depositing a plurality of layers of pre-impregnated composite material in a female type mold;
- a second step in which the composite material, in a number of layers that varies according to the desired résistance and/or rigidity of the main girder (20), is subjected to polymerization;
- a third step in which each main girder (20) is removed from the mold,
- a fourth step in which said auxiliary elements (17, 18, 19, 27, 40, 42, 45) are associated with each girder (20) so as to form a relative segment (21-25);
- a fifth step in which the extendible arm (10) is assembled, connecting the various segments (21-25) at the respective ends,
the method being **characterized in that** the cross section of each of said main girders (20) of said segments (21-25) is constant over its whole length, and **in that** said female mold consists of variable number of elementary molds of equal constant section, connected in sequence with each other in the desired number according to the overall length of the main girder (20) to be made.

2. Method as in claim 1, **characterized in that** said constant section is substantially rectangular.

3. Method as in claim 1, **characterized in that** said constant section is substantially trapezoid, with an inclination of the sides with an angle comprised between 0.3° and 1.5°.

4. Method as in claim 1, **characterized in that** said auxiliary elements (17, 18, 19, 27, 40, 42, 45) for connection to adjacent segments or for attachment of movement and/or supporting devices for the pipe (48) that carries the concrete are made of composite material and are obtained using a male type mold.

5. Method as in claim 1, **characterized in that** said polymerization step is performed in an autoclave.

6. Method as in claim 1, **characterized in that** said first step comprises the insertion, during the molding step and between the layers of composite material, in correspondence with at least one end of the segment, of metal inserts and/or reinforcements (27) able to allow connection of the segment to a segment immediately before or after.

7. Method as in claim 1, **characterized in that** said first step comprises the making of holes, on at least one of the walls of said girder (20), for the positioning of metal bushings (42) for the insertion and positioning of connection pins between the segments (21-25).

8. Method as in claim 1, **characterized in that** said first step comprises the making. of a thicker part, in at least one zone (44) of the perimeter of said girder (20), for the positioning of a support (45) for the pipe (48) that carries the concrete.

9. Method as in claim 1, **characterized in that** in said fourth step on each girder (20) said auxiliary elements (17, 18, 19, 27, 40, 42, 45) are attached, so as to form a relative segment (21- 25).

10. Method as in claim 1, **characterized in that** the production of said auxiliary elements (17, 18, 19, 27, 40, 42, 45) comprises the insertion during said first step, between the layers of composite material, of metal inserts and/or reinforcements able to allow the connection of the segment to a segment immediately before or after.

11. Method as in claim 1, **characterized in that** in said fourth step connection elements (19, 17, 27) to adjacent segments and/or the attachment elements of the movement devices are glued onto the relative anchorage zones of the segments.

12. Method as in claim 11, **characterized in that** said gluing step is associated with a suction of the air bubbles.

13. Method as in claim 12, **characterized in that** said gluing step is associated with mechanical connection by means of rivetting.

14. Method as in claim 1, **characterized in that** the mold used in said first forming step comprises at least an end conformed so as to obtain a shape suitable for the direct connection between one segment (21-25) and the adjacent one.

15. Method as in claim 1, **characterized in that** the composite material used is of the woven and/or unidirectional type made of low modulus carbon.

16. Arm for the distribution of concrete (10), or other material similar to concrete, used on heavy work vehicles (11), such as for example a truck or concrete mixer, said arm (10) being obtained in a method as in claim 1 and comprising a plurality of segments (21-25) selectively folding and extensible one with respect to the other, **characterized in that** each segment (21-25) comprises a main box-like girder (20) made of composite material and having a cross section constant over its whole length.

17. Arm as in claim 16, **characterized in that** said constant section is substantially rectangular.

18. Arm as in claim 16, **characterized in that** said constant section is substantially trapezoid, with an inclination of the sides with an angle comprised between 0.3° and 1.5°.

19. Arm as in claim 16, **characterized in that** said main girder (20) comprises a number of layers of composite material that is variable, also locally, according to the desired resistance and/or rigidity of the main girder (20).

## Patentansprüche

1. Verfahren zum Herstellen eines Arms für die Verteilung von Beton (10), oder von einem anderen Material, das betonähnlich ist, verwendet an Baustellenfahrzeugen (11), wie zum Beispiel an einem Laster oder an einem Betonmischer, wobei der Arm (10) aufweist eine Mehrzahl von Segmenten (21-25), die selektiv bezüglich einander faltbar und entfaltbar sind, wobei jedes der Segmente (21-25) einen Hauptträger (20) und Hilfselemente (17, 18, 19, 27, 40, 42, 45) aufweist zur Verbindung an benachbarte Segmente oder zum Anbringen von Bewegungsund/oder Haltevorrichtungen für das Rohr (48), das den Beton transportiert, wobei das Verfahren aufweist
- einen ersten Schritt, bei welchem jeder Hauptträger (20) gebildet wird mit einer vorbestimmten Länge durch Anordnen einer Mehrzahl von Schichten von vorimprägniertem Verbundmaterial in einer Aufnahmeform,
- einen zweiten Schritt, bei welchem das Verbundmaterial in einer Anzahl von Schichten, die gemäß der gewünschten Festigkeit und/oder Steifigkeit des Hauptträgers (20) variiert, einer Polymerisation unterworfen wird,
- einen dritten Schritt, bei welchem jeder Hauptträger (20) von der Form entnommen wird,
- einen vierten Schritt, bei welchem die Hilfselemente (17, 18, 19, 27, 40, 42, 45) mit jedem Träger (20) verbunden werden, um ein Relativsegment (21-25) zu bilden,
- einen fünften Schritt, bei welchem der entfaltbare Arm (10) zusammengebaut wird, indem die diversen Segmente (21-25) an den jeweiligen Enden miteinander verbunden werden,
wobei das Verfahren **dadurch gekennzeichnet ist, dass** der Querschnitt von jedem der Hauptträger (20) der Segmente (21-25) über seine gesamte Länge konstant ist, und **dadurch**, dass die Aufnahmeform aus einer variablen Anzahl von Grundformen von gleichem konstanten Schnitt besteht, die in Sequenz miteinander verbunden sind in der gewünschten Anzahl gemäß der Gesamtlänge des herzustelleneden Hauntträgers (20)

2. Verfahren gemäß Anspruch 1, **dadurch gekennzeichnet, dass** der konstante Schnitt im Wesentlichen rechteckig ist.

3. Verfahren gemäß Anspruch 1, **dadurch gekennzeichnet, dass** der konstante Schnitt im Wesentlichen trapezförmig ist, wobei die Neigung der Seiten einen Winkel von zwischen 0,3° und 1,5° aufweist.

4. Verfahren gemäß Anspruch 1, **dadurch gekennzeichnet, dass** die Hilfselemente (17, 18, 19, 27, 40, 42, 45) zur Verbindung an benachbarte Segmente oder zum Anbringen von Bewegungsund/oder Haltevorrichtungen für das Rohr (48), das den Beton transportiert, aus Verbundmaterial gemacht sind und durch Verwenden einer Einsetzform erzielt sind.

5. Verfahren gemäß Anspruch 1, **dadurch gekennzeichnet, dass** der Polymerisationsschritt in einem Reaktionsbehälter durchgeführt wird.

6. Verfahren gemäß Anspruch 1, **dadurch gekennzeichnet, dass** der erste Schritt aufweist das Einsetzen von Metalleinsätzen und/oder Verstärkungen (27), welche die Verbindung des Segments zu einem Segment unmittelbar davor oder danach erlauben, während des Gießschritts und zwischen die Schichten von Verbundmaterial korrespondierend mit wenigstens einem Ende des Segments.

7. Verfahren gemäß Anspruch 1, **dadurch gekennzeichnet, dass**. der erste Schritt aufweist das Herstellen von Löchern an wenigstens einer der Wände des Trägers (20) zum Positionieren von Metallbuchsen (42) für das Einsetzen und die Positionierung von Verbindungszapfen zwischen den Segmenten (21-25).

8. Verfahren gemäß Anspruch 1, **dadurch gekennzeichnet, dass** der erste Schritt aufweist das Herstellen eines dickeren Teils in wenigstens einer Zone (44) des Umfangs des Trägers (20) zum Positionieren eines Halters (45) für das Rohr (48), das den Beton transportiert.

9. Verfahren gemäß Anspruch 1, **dadurch gekennzeichnet, dass** im vierten Schritt die Hilfselemente (17, 18, 19, 27, 40, 42, 45) an jedem Träger (20) angebracht werden, um eine Relativsegment (21-25) zu bilden.

10. Verfahren gemäß Anspruch 1, **dadurch gekennzeichnet, dass** die Produktion der Hilfselemente (17, 18, 19, 27, 40, 42, 45) aufweist das Einsetzen von Metalleinsätzen und/oder Verstärkungen zwischen die Schichten des Verbundmaterials während des ersten Schritts, um die Verbindung des Segments mit einem Segment unmittelbar davor oder danach zu erlauben.

11. Verfahren gemäß Anspruch 1, **dadurch gekennzeichnet, dass** im vierten Schritt Verbindungselemente (19, 17, 27) zu benachbarten Segmenten und/oder die Befestigungselemente der Bewegungsvorrichtungen an den relativen Verankerungszonen der Segmente angebracht werden.

12. Verfahren gemäß Anspruch 11, **dadurch gekennzeichnet, dass** der Anbringungsschritt mit einem Saugen der Luftblasen in Verbindung steht.

13. Verfahren gemäß Anspruch 12, **dadurch gekennzeichnet, dass** der Anbringungsschritt in Form einer mechanischen Verbindung mittels Nietens erfolgt.

14. Verfahren gemäß Anspruch 1, **dadurch gekennzeichnet, dass** die Form, die im ersten Ausbildungsschritt verwendet wird, aufweist wenigstens ein Ende, das angepasst ist, um eine Gestalt zu erzielen, die für die direkte Verbindung zwischen dem einen Segment (21-25) und dem benachbarten geeignet ist.

15. Verfahren gemäß Anspruch 1, **dadurch gekennzeichnet, dass** das Verbundmaterial, das verwendet wird, vom Webtyp und/oder vom unidirektionalen Typ ist, gemacht aus einem Niedrigmodul-Kohlenstoff.

16. Arm für die Verteilung von Beton (10) oder von einem anderen Material, das betonähnlich ist, verwendet an Baustellenfahrzeugen (11), wie zum Beispiel einem Laster oder einem Betonmischer, wobei der Arm (10) durch ein Verfahren gemäß Anspruch 1 erzielt ist und aufweist eine Mehrzahl von Segmenten (21-25), die bezüglich einander selektiv faltbar und auseinanderfaltbar sind, **dadurch gekennzeichnet, dass** jedes Segment (21-25) einen kastenförmigen Hauptträger (20) aufweist, der aus Verbundmaterial gemacht ist und der über seine gesamte Länge hinweg einen konstanten Querschnitt hat.

17. Arm gemäß Anspruch 16, **dadurch gekennzeichnet, dass** der konstante Schnitt im Wesentlichen rechteckig ist.

18. Arm gemäß Anspruch 16, **dadurch gekennzeichnet, dass** der konstante Schnitt im Wesentlichen trapezförmig ist, wobei die Neigung der Seiten einen Winkel von 0,3° und 1,5° aufweist.

19. Arm gemäß Anspruch 16, **dadurch gekennzeichnet, dass** der Hauptträger (20) eine Anzahl von Schichten von Verbundmaterial hat, die variabel ist, auch lokal, gemäß der gewünschten Festigkeit und/oder der Steifigkeit des Hauptträgers (20).

## Revendications

1. Procédé de fabrication d'un bras pour la distribution de béton (10), ou d'autres matériaux similaires au béton, utilisé sur les véhicules de chantier (11) tels qu'un camion ou un camion bétonnière malaxeur, ledit bras (10) comprenant une pluralité de segments (21-25) sélectivement repliables et extensibles les uns par rapport aux autres, chacun desdits segments (21-25) comprenant une poutre principale (20) et des éléments auxiliaires (17, 18, 19, 27, 40, 42, 45) destinés à la liaison aux segments adjacents ou à la fixation de dispositifs de déplacement et/ou de support du tuyau (48) qui transporte le béton, le procédé comprenant :
- une première étape consistant à mettre en forme chaque poutre principale (20), de longueur prédéfinie, en déposant une pluralité de couches de matériau composite pré-imprégné dans un moule de type femelle ;
- une deuxième étape consistant à faire polymériser le matériau composite, dont le nombre de couches varie en fonction de la résistance et/ou de la rigidité souhaitée de la poutre principale (20) ;
- une troisième étape consistant à retirer chaque poutre principale (20) du moule ;
- une quatrième étape consistant à associer lesdits éléments auxiliaires (17, 18, 19, 27, 40, 42, 45) à chaque poutre (20) de manière à former un segment correspondant (21-25) ;
- une cinquième étape consistant à assembler le bras extensible (10) en reliant les différents segments (21-25) aux extrémités respectives ;
le procédé **se caractérisant en ce que** la section transversale de chacune desdites poutres principales (20) desdits segments (21-25) est constante sur toute sa longueur, et **en ce que** ledit moule femelle se compose d'un nombre variable de moules élémentaires d'égale section constante, reliés successivement les uns aux autres en nombre voulu, en fonction de la longueur totale de la poutre principale (20) à fabriquer.

2. Procédé selon la revendication 1, **caractérisé en ce que** ladite section constante est sensiblement rectangulaire.

3. Procédé selon la revendication 1, **caractérisé en ce que** ladite section constante est sensiblement trapézoïdale, les côtés s'inclinant d'un angle compris entre 0,3° et 1,5°.

4. Procédé selon la revendication 1, **caractérisé en ce que** lesdits éléments auxiliaires (17, 18, 19, 27, 40, 42, 45), destinés à la liaison aux segments adjacents ou à la fixation de dispositifs de déplacement et/ou de support du tuyau (48) qui transporte le béton, sont en matériau composite et sont obtenus au moyen d'un moule de type mâle.

5. Procédé selon la revendication 1, **caractérisé en ce que** ladite étape de polymérisation est effectuée en autoclave.

6. Procédé selon la revendication 1, **caractérisé en ce que** ladite première étape consiste à introduire, pendant l'étape de moulage et entre les couches de matériau composite, au niveau d'au moins l'une des extrémités du segment, des renforts et/ou des inserts métalliques (27) pouvant permettre la liaison du segment à un segment placé immédiatement avant ou après.

7. Procédé selon la revendication 1, **caractérisé en ce que** ladite première étape consiste à fabriquer des trous sur l'une au moins des parois de ladite poutre (20), en vue de positionner des bagues métalliques (42) destinées à introduire et positionner des goupilles de liaison entre les segments (21-25).

8. Procédé selon la revendication 1, **caractérisé en ce que** ladite première étape consiste à fabriquer une pièce plus épaisse, dans au moins une zone (44) du périmètre de ladite poutre (20), en vue de placer un support (45) destiné au tuyau (48) qui transporte le béton.

9. Procédé selon la revendication 1, **caractérisé en ce qu'**à ladite quatrième étape, lesdits éléments auxiliaires (17, 18, 19, 27, 40, 42, 45) sont fixés sur chaque poutre (20) de manière à former un segment correspondant (21-25).

10. Procédé selon la revendication 1, **caractérisé en ce que** la production desdits éléments auxiliaires (17, 18, 19, 27, 40, 42, 45) consiste à introduire lors de ladite première étape, entre les couches de matériau composite, des renforts et/ou des inserts métalliques pouvant permettre de relier le segment à un segment placé immédiatement avant ou après.

11. Procédé selon la revendication 1, **caractérisé en ce qu'**à ladite quatrième étape, les éléments de liaison (19, 17, 27) aux segments adjacents et/ou les éléments de fixation des dispositifs de déplacement sont collés sur les zones d'ancrage correspondantes des segments.

12. Procédé selon la revendication 11, **caractérisé en ce que** ladite étape de collage est associée à l'aspiration des bulles d'air.

13. Procédé selon la revendication 12, **caractérisé en ce que** ladite étape de collage est associée à une liaison mécanique par rivetage.

14. Procédé selon la revendication 1, **caractérisé en ce que** le moule utilisé à ladite première étape de mise en forme comprend au moins une extrémité dessinée de manière obtenir une forme appropriée à relier directement un segment (21-25) et le segment adjacent.

15. Procédé selon la revendication 1, **caractérisé en ce que** le matériau composite utilisé est du type tissé et/ou unidirectionnel, en carbone à faible module.

16. Bras pour la distribution de béton (10), ou d'autres matériaux similaires au béton, utilisé sur les véhicules de chantier (11) tels qu'un camion ou un camion bétonnière malaxeur, ledit bras (10) étant obtenu par un procédé selon la revendication 1 et comprenant une pluralité de segments (21-25) sélectivement repliables et extensibles les uns par rapport aux autres, **caractérisé en ce que** chaque segment (21-25) comprend une poutre principale (20) de forme caissonnée en matériau composite et de section transversale constante sur toute sa longueur,

17. Bras selon la revendication 16, **caractérisé en ce que** ladite section constante est sensiblement rectangulaire.

18. Bras selon la revendication 16, **caractérisé en ce que** ladite section constante est sensiblement trapézoïdale, les côtés s'inclinant d'un angle compris entre 0,3° et 1,5°.

19. Bras selon la revendication 16, **caractérisé en ce que** ladite poutre principale (20) comprend un nombre de couches de matériau composite qui peut varier, même localement, en fonction de la résistance et/ou de la rigidité souhaitée de la poutre principale (20).
